# EUROPEAN PATENT SPECIFICATION

(11) **EP 2 415 841 B1**
(45) Date of publication and mention of the grant of the patent: **12.08.2015**
(21) Application number: 10194473.4
(22) Date of filing: 10.12.2010
(51) Int. Cl.: C09B 67/00, C08K 5/00, C09C 1/36, C09C 1/48

(54) **Colorant compositions and production methods therefor**
Farbzusammensetzungen und Herstellungsverfahren dafür
Compositions de colorants et leurs procédés de production

(30) Priority: 25.07.2010 IL 20720710
(43) Date of publication of application: 08.02.2012
(73) Proprietor: Kafrit Industries (1993) Ltd., 85142 M.P. Negev (IL)
(72) Inventor: Cohen, Yoav, 65258 Tel Aviv (IL)
(74) Representative: Regimbeau

(56) References cited:
- GB-A- 764 929
- US-A- 4 624 983

## Description

### FIELD OF THE INVENTION

The present invention relates generally to the field of polymer additives and, more particularly, to methods for modifying plastic resins and to liquid concentrates used in such methods. The invention is especially concerned with liquid colorant or additive concentrates and with the use of such concentrates in coloring or modifying plastics.

### BACKGROUND OF THE INVENTION

Traditionally, plastics have been colored by tumble blending the plastic with a solid colorant or additive concentrate, such as a pigment powder. The blended material is then fed into an extruder or molding machine where the resin and the colorant are plasticized and the colorant is incorporated into the molten plastic.

However, this method may have number of drawbacks. In many cases, a solid colorant or additive does not mix uniformly with plastic, or it does not disperse uniformly during molding. Further powder colorants often segregate from the plastic during pre-molding handling because of large particle size or specific gravity differences.

In the late 1950s, solid concentrates were developed comprising powder pigments/additives and plastic resin as a carrier. The ingredients were then well mixed together and processed in an extruder to manufacture colored pellets. These colored pellets were then used as colorants for plastics by adding to a plasticized mixture as a color- modifying concentrate.

However, this method may have its own drawbacks. When the pigments/additives and the resin were being mixed during the extrusion process, it was found to be difficult to adequately mix the concentrates with the primary plastic to achieve a homogenous colored plastic product. Furthermore, it was found that one needed to use a resin, which was within the concentrate, which was suitable for homogenous mixing with the primary plastic material. This meant that there were numerous different concentrates being produced, each one being compatible to a plastic family from which the specific plastic resin of the color concentrate was taken.

In recent years, liquid color concentrates have been developed in an effort to overcome the disadvantages of the traditional solid colorants. Liquid color concentrates are dispersions of a colorant in a carrier carrier. Being liquids, these colorant concentrates may be accurately metered directly into molding machines or extruders by in-line metering systems, which help overcome many of the disadvantages of solid colorants. They have been used to color thermoplastic resins such as polypropylene, acrylonitrile-butadiene-styrene (ABS), polystyrene, poly(ethylene terephthalate) (PET) and the like. However, liquid color concentrates needed a high percentage of pigment, typically over 35%, in order to be efficient and the liquid carrier was limited in compatibility with plastic resins.

Several prior art techniques have been developed in order to achieve uniform and efficient liquid colorant concentrates. One prior art technique requires that carriers for liquid color concentrates be primarily based on expensive surfactants and wetting agents. For example, U.S. Pat. Nos. 3,956,008 and 4,167,503 disclose colorants having surfactant-based carriers that provide pigment dispersion media. Although surfactant-based carriers generally perform satisfactorily, they are subject to several drawbacks. Firstly, the surface active agents used as dispersants are expensive, which can significantly add to the cost of coloring or modifying thermoplastic resins. Secondly, since the surfactants used in the carriers are polar in nature and hygroscopic, the liquid color concentrates are often incompatible with certain plastics. This incompatibility can cause poor mixing in the molder or extruder, resulting in nonuniform color, such as specks of colorant or streaking of colorant. Thirdly, surfactant-based carriers are often responsible for a decrease in output due to lubrication of the forming equipment, especially at high colorant loadings. For example, extrusion of PET is commonly adversely affected by standard liquid colorant concentrates through "screw slippage" in the molding machine or extruder.

A further problem encountered with surfactant-based carriers occurs in the extrusion of monoaxially oriented polypropylene. A phenomenon known as "water carryover" occurs when incompatible surfactants move to the surface of the plastic and, being hydrophilic, tend to hold water. This results in an unacceptable amount of water being carried over from the quenching water bath to the takeup equipment. Another problem known as exudation occurs when incompatible carriers exude, or spew up, to the surface of the molded plastic.

Finally, since the colorant and inert filler such as fumed silica are generally used to control viscosity, these results in a concentrate that is thixotropic, that is, one which forms a gel that must be broken up before it can flow.

A second prior art technique developed to achieve uniform and storage stable colorant dispersions involves the use of carriers not primarily based on surfactants. This technique focuses on thixotropy to maintain a stable dispersion of the colorant or additive. As noted above, a thixotropic concentrate is one which will not readily flow under gravity, but which thins to a very low viscosity on stirring or other application of shear.

U.S. Pat. Nos. 4,341,565 and 4,444,714 disclose stable liquid gel colorants that comprise a suspension of organic pigments in a liquid carrier that is a plasticizer and which is gelled by an organophilic, expanding lattice clay that is ion exchanged with alkyl ammonium ions. The gel is modified by the addition of certain hydroxyalkyl fatty amines or fatty imidazolinium quaternaries.

U.S. Pat. No. 4,571,416 and 4,624,983 disclose liquid color and additive concentrates that are dispersions of a colorant and/or other additive in a non surfactant based carrier. The carrier includes a low molecular weight addition polymer and an essentially nonvolatile solvent for the low molecular weight addition polymer. The carrier may also contain a dispersion aid, such as oleic acid, especially when the colorant is an inorganic pigment.

However, the non-surfactant based thixotropic colorant concentrates are also subject to certain limitations. For example, the thixotropic concentrates, because of their initially high viscosity, may not flow evenly in a vessel to the pump inlet and are therefore often not readily pump able for metering a given amount of the colorant concentrate into an extruder or molding machine.

U.S. Pat. No. 4,188,236 is directed to the production of a non-dusting pigment composition by contacting an aqueous dispersion of an organic pigment with (a) A solution or dispersion of an alkaline soluble rosin acid derivative; (b) a sorbitan ester; and (c) a water-insoluble organic carrier having a melting point below 100° C. at a temperature above the melting point of both the Sorbian ester and the organic carrier.

U.S. Pat. No. 4,415,705 is directed to high-solids pigment concentrates containing a dispersing agent formed by reacting a poly (lower alkylene)imine with a polyester comprising the reaction product of hydroxystearic acid, or its oligomer, with tall oil rosin. The patent describes a black pigment concentrate that includes about 4.8 parts by weight of a maleic-modified pentaerythritol ester of rosin which is reported to have a Brookfield viscosity of 282 Poise initially and 368 Poise after three days aging. The concentrate is reported to flow readily by gravity and can be handled by pumps commonly used in the art.

U.S Pat. No. 5,308,395 is directed to the use of certain rosin materials with a small addition of surfactants. However, in order to efficiently and uniformly coloring plastics it calls for high percentage of pigment/additive and a relatively high let down. Furthermore the composition described is not compatible with all plastic resins.

U.S Pat. No. 7,300,512 discloses a process of dispersing at least one pigment into a carrier such as castor oil or a vegetable wax such as palm oil glyceride wax.

Thus, the prior art liquid color concentrates available to date have been largely inefficient, expensive, and not completely satisfactory from the standpoint of achieving color uniformity. Accordingly, there continues to be a need for liquid colorant/additive concentrates that are: (1) cost effective; (2)compatible with a wide variety of commercial thermoplastic resins; (3) suitable for use in conventional in-line metering and blending equipment; and (4) possess good shelf stability and uniformity.

There is thus still a need to develop novel edible colorant materials, which are cheap and have compatibility with a broad spectrum of plastics.

### SUMMARY OF THE INVENTION

It is an object of some aspects of the present invention to provide liquid colorant concentrates that are: (1) cost effective; (2)compatible with a wide variety of commercial thermoplastic resins; (3) suitable for use in conventional in-line metering and blending equipment; and (4)possess good shelf stability and uniformity.

The liquid colorant concentrate composition is as recited in claim 1.

The invention pertains to liquid concentrates that are storage stable, compatible with most plastic resins, allow a low let down percentage, low in cost and made with natural "edible" materials which are as recited in claim 1.

The liquid color concentrates of the present invention have a body or consistency, which allow them to readily flow and to easily be introduced into processing equipment. The liquid color concentrates of the present invention are also characterized by uniform viscosity, low let down and by substantially low pigment usage percentage.

There is thus provided according to an embodiment of the present invention, a liquid colorant concentrate composition including:
(I) a natural oil-based carrier including;
   (a) at least 35 percent by weight of the carrier including at least one vegetable oil; and
   (b) at least 1.0 percent by weight of the total concentrate including at least one salt; and
(II) at least one colorant.

Additionally, according to an embodiment of the present invention, the composition is liquid in a temperature range of 4 to 40 °C.

Furthermore, according to an embodiment of the present invention, the colorant concentrate composition includes up to 50 percent by weight of the at least one colorant.

Moreover, according to an embodiment of the present invention, the concentrate is adapted to flow readily by gravity and is characterized by a viscosity at 25 °C under a shear stress of 0.125 N/cm² (12.5 thousand dynes/cm²) of 0.005 to 1.5 Pa.s ( 5 to 1500 centiPoise).

According to an additional embodiment of the present invention, the natural oil is liquid at 25°C.

Moreover, according to an embodiment of the present invention, the carrier is substantially free of water.

Yet further, according to an embodiment of the present invention, the colorant concentrate composition includes 0.5 to 20% by weight of starch.

Additionally, according to an embodiment of the present invention, the natural oil-based carrier includes between 35 to 98% percent by weight of the at least one natural oil; and at least 1 to 35 percent by weight of the at least one salt.

Moreover, according to an embodiment of the present invention, the colorant concentrate composition includes 0.5 percent to 50% by weight of the at least one colorant.

Additionally, according to an embodiment of the present invention, the at least one colorant is selected from the group consisting of titanium dioxide, carbon black, iron oxide, zinc chromate, cadmium sulfide, chromium oxide, a sodium aluminum silicate complex, an ultramarine pigment, metal flakes, an azo pigment, a diazo pigment, phthalocyanine, a quinacridone pigment, a perylene pigment, isoindolinone, anthraquinone, thio-indigo, a solvent dye and combinations thereof.

There is thus provided according to another embodiment of the present invention, a method for forming a colorant concentrate composition, the method including;
a. blending a natural oil-based carrier including at least 40 percent by weight of the carrier of at least one vegetable oil with at least 1.0% by weight of the carrier of at least one salt to obtain a carrier composition; and
b. mixing up to 50 percent by weight of a concentrate including at least one colorant,
with the carrier composition thereby forming the colorant concentrate composition.

Additionally, according to an embodiment of the present invention, the mixing step induces size reduction of particles in the colorant concentrate composition to less than 10 microns.

Moreover, according to an embodiment of the present invention, the mixing step induces size reduction of particles in the colorant concentrate composition to a maximum of 1-5 microns.

Furthermore, according to an embodiment of the present invention, the mixing step induces size reduction of particles in the colorant concentrate composition to an average sub-micron size.

Additionally, according to an embodiment of the present invention, both blending and mixing steps are performed in one cycle in one vessel.

Additionally, according to an embodiment of the present invention, the colorant concentrate composition includes colorant particles of a mean particle size in the range of 0 to 1 microns.

Furthermore, according to an embodiment of the present invention, the colorant concentrate composition includes salt particles of a mean particle size in the range of 1 to 10 microns.

The present invention will be more fully understood from the following detailed description of the preferred embodiments thereof, taken together with the drawings.

### BRIEF DESCRIPTION OF THE DRAWINGS

The invention will now be described in connection with certain preferred embodiments with reference to the following illustrative figures so that it may be more fully understood.

With specific reference now to the figures in detail, it is stressed that the particulars shown are by way of example and for purposes of illustrative discussion of the preferred embodiments of the present invention only and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
Fig. 1 is a simplified flow chart of a method for producing a concentrate colorant composition, in accordance with an embodiment of the present invention; and
Fig. 2 is a simplified schematic pictorial illustration showing the products of steps in a method for producing a concentrate colorant composition, in accordance with an embodiment of the present invention.

In all the figures similar reference numerals identify similar parts.

### DETAILED DESCRIPTION OF PREFERRED EMBODIMENTS

In the detailed description, numerous specific details are set forth in order to provide a thorough understanding of the invention. However, it will be understood by those skilled in the art that these are specific embodiments and that the present invention may be practiced also in different ways that embody the characterizing features of the invention as described and claimed herein.

As used herein, the term "vegetable oil" is intended herein to mean any one or more lipid material derived from plants. Physically, oils are liquid at room temperature, and fats are solid.

As used herein, the term "natural oil" is intended herein to mean any one or more lipid material derived from one or more natural sources, including plants, animals, algae and microorganisms. By natural is meant derived from nature, as opposed to synthetic.

A "colloidal dispersion" is defined herein as a heterogeneous system which is made up of a dispersed phase and dispersion medium. In a colloidal dispersion, at least one substance is dispersed as very fine particles in another substance called a dispersion medium.

A "colloidal suspension" is a colloidal dispersion in which the dispersed phase is solid and the dispersion medium is liquid.

According to some embodiments of the present invention, the colloidal suspension comprises an oil-in-oil emulsion as the liquid phase or dispersion medium.

By "oil-in-oil emulsion" is meant a suspension of small globules of one oil in a second oil, with which the first will not mix.

It should be understood that the terms homogenizing, size-reducing, milling may be used interchangeably herein.

It should be understood that the terms colorant, dye and pigment may be used interchangeably herein.

In one of its aspects, the present invention is directed to liquid color concentrate compositions comprising:
(I) a natural oil-based carrier comprising:
   (a) at least 35% by weight of at least one vegetable oil; and
   (b) at least one salt; and
(II) at least one colorant:

In another of its aspects, the present invention is directed to liquid color concentrate compositions comprising:

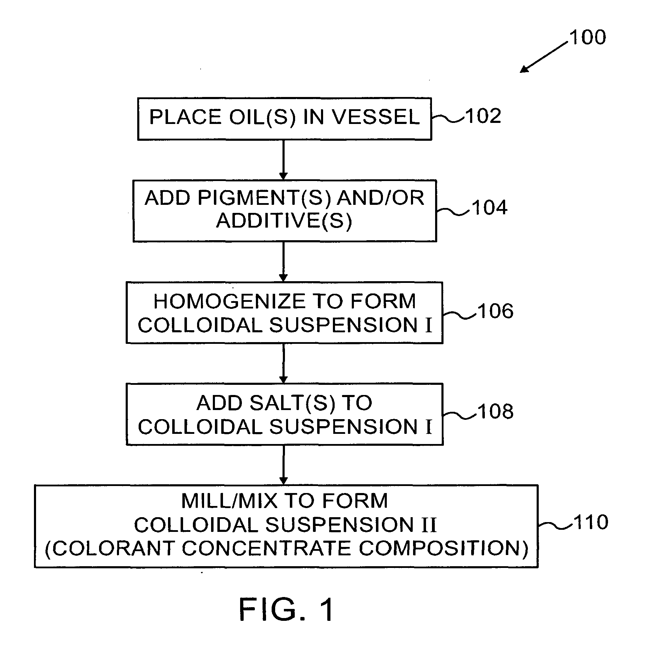

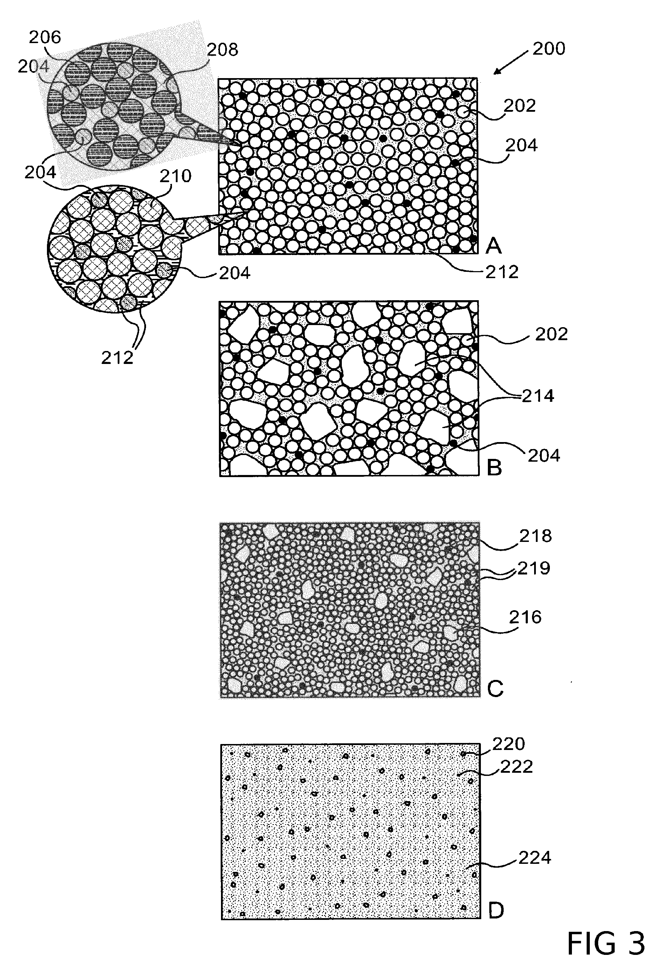

Reference is now made to Fig. 1, which is a simplified flow chart 100 of a method for producing a concentrate colorant composition, in accordance with an embodiment of the present invention. According to this embodiment, the production of the concentrate colorant composition is performed in one vessel in batch mode. However, this should not be considered to be limiting and some/all of the steps may be performed in continuous, fed-batch, plug flow and other modes, as are well known in the art.

A vessel of a suitable size and geometry is chosen for the performance of all the steps. This may be a stainless steel cylindrical vessel with an optional external cooling jacket. At least one natural oil, such as a vegetable oil, as described herein, is placed in the vessel in a preparatory step 102.

Thereafter, at least one pigment or additive is added to the vessel in an adding step 104. According to some embodiments the pigment/additive are solid particles of an average diameter of 5-50 microns, or, according to further embodiments 10-15 microns. The weight ratio of the oil to pigment/additive is normally within the range 9:1 to 1.5:1. According to some embodiments, the ratio is 4:1 to 2:1.

A homogenizer or emulsifier of suitable dimensions (typically having a diameter of 1 relative to the vessel diameter of 1.5-4.5) is lowered into the oil and activated. This homogenizing step 106 is performed for 5-30 minutes, and sometimes for 2-15 minutes (see examples hereinbelow). A first colloidal suspension (colloidal suspension I) is formed in which the pigment particles sizes are, according to some embodiments, in the range of 10 to 15 microns. A schematic illustration of the first colloidal suspension is shown in Fig. 2A hereinbelow The vessel temperature should be maintained at less than 80°C, in some cases. If required, external cooling may be used by means of cooling water in a cooling jacket, if required.

Without being bound to any theory, this homogenization step provides both mechanical and hydraulic shear, which disperse the solid particles of the pigment(s) /additive(s) and largely prevents re-agglomeration thereof. In some cases the oily liquid dispersion medium may form an oil-in-oil emulsion. In other cases, the oily liquid dispersion medium may be, at least in part, a foam. A foam is a two-phase system, similar to an emulsion, in which the dispersed phase is a gas or air. Additionally or alternatively, the oily liquid dispersion medium may be, at least in part, an air-in-oil emulsion. This air-in-oil emulsion comprises air bubbles dispersed in an oil phase. Additionally or alternatively, the oily liquid dispersion medium may be, at least in part, an oil-in-air emulsion. This oil-in-air emulsion comprises oil globules dispersed in an air phase. In some cases, the oily liquid dispersion may comprise a combination of some or all of the above.

In a salt addition step 108, at least one salt, such as sodium chloride is added in a weight ratio of 1:15 to 7:15 to the first colloidal suspension. The salt particles may be in a size range of 50-100 microns, for example (see Fig 2B hereinbelow).The oily liquid dispersion medium in the first colloidal suspension may be, according to some embodiments, an oil-in-oil emulsion.

In a milling/mixing step 110, the salt and first colloidal suspension are milled in the vessel by a basket mill, for example for 5-100 minutes, and often for 20-30 minutes at 500-2500 rpm According to some embodiments, after 15 minutes, the salt particle size is reduced to around 30-50 microns (Fig. 2C hereinbelow) and the pigment particle size is in the range of 2-5 microns. After around 30 minutes of milling the mean salt particle size is around 5 microns and the mean pigment/additive particle size is less than one micron. The resultant second colloidal suspension (colloidal suspension II) is termed herein a colorant concentrate composition. The vessel temperature should be maintained at less than 150 °C. If required, external cooling may be used by means of cooling water in a cooling jacket, if required.

Without being bound to any particular theory, it is thought that the salt(s) act as a spacer and largely prevent reagglomeration of the pigment particles. Additionally, the salt particles are hard and abrasive, thereby enhancing the particle size reduction of the pigment/additive particles. The salt particles' electrical properties of conductivity may also assist in the stabilization of the colloidal suspension.

It should be understood that, in some cases, the salt and other additives may be added to the oil prior to the addition of the pigment(s). The example above should not be considered to be limiting.

Reference is now made to Fig. 2, which is a simplified schematic pictorial illustration showing the products of some steps in a method for producing a concentrate colorant composition, in accordance with an embodiment of the present invention.

Fig. 2A shows a schematic example of the first colloidal suspension 200, resultant from step 106 (Fig. 1). An oil dispersion medium 202 comprises dispersed solid pigment particles 204 in a particle range distribution of 10-15 micron. The oil dispersion medium may be in the form of an emulsion in some cases (oil-in-oil emulsion). The oil dispersion medium 202 may comprise oil globules 206 and entrained interstitial air 208. Without being bound to any theory, this may be in the state of a partial or complete foam and/or an oil-in-air emulsion. Additionally or alternatively, there may be air bubbles 210 contained within interstitial oil 212, forming at least in part, an air-in-oil emulsion, in which the oil globules size is 0.1-0.8 microns and air bubbles are under 0.1 microns

Fig. 2B shows the product of step 108 (Fig. 1) comprising large salt particles 214 of a size range of around 50-100 microns, pigment particles 204 in a particle range distribution of 10-15 micron in the oil dispersion medium (as shown in further detail in the exploded schematic of Fig 2A hereinabove).

Fig. 2C shows the product of step 110 (Fig. 1) after 15 minutes of milling with salt particles 216 of a size range of around 30-50 microns, pigment particles 218 in a particle range distribution of 0-10 microns in an oil dispersion medium 219.

Fig. 2D shows the product (colorant concentrate composition) of step 110 (Fig. 1) after 30 minutes of milling with salt particles 220 of a size range of around 3-8 microns, pigment particles 222 in a particle range distribution of 0-1 microns in an oil dispersion medium 224. The oil dispersion medium 224 after 30 minutes of milling may, according to some embodiments, be more broken up than oil dispersion medium 219, obtained after 15 minutes of milling (Fig. 2C).

Some embodiments of the present invention are directed to liquid color / additives concentrate compositions and to carriers therefor. These compositions comprise, on the one hand, traditional pigments and processing additives, and the carriers are made of natural "green" ingredients, having no volatile substances, which evaporate and would normally leave residues (per the prior art compositions). The chemical stability of the carrier and the ability to grind the ingredients to a sub-micron size allow the use of a relatively low pigment / additive percentage while maintaining the coloring strength and "coverage".

Some further examples of the components used in the products of the present invention are provided hereinbelow.

### Carrier (I) (also termed herein oil dispersion medium)

### Vegetable oil

Vegetable oils are liquid at room temperature have a low viscosity and most have a balanced combination of fatty acids. In order for the compositions to mix well with plastic resins containing different end groups, such as carboxyl and hydroxyl, a balance in the carrier must be maintained between saturated fatty acids (for high temperature and stress stability) and mono- and polyunsaturated fatty acids for lower viscosity and flexibility. Most vegetable oils comprise both saturated and unsaturated fatty acids, as appears in Tables 1 and 2. Most vegetable oils are relatively inexpensive and easy to obtain.

In some embodiments, it is advantageous to use a combination of two or more vegetable oils to achieve an optimal balance between saturated, and mono-unsaturated and polyunsaturated fatty acids.

**Table 1. Suitable vegetable oils and compositions**

| | Saturated fatty acids | Mono-unsaturated fatty acids | Poly-unsaturated fatty acids |
|---|---|---|---|
| Soybean | 15% | 26% | 59% |
| Cotton seed | 25% | 21% | 54% |
| Sunflower | 12% | 23% | 65% |
| Canola | 7% | 53% | 40% |
| Corn | 17% | 24% | 59% |

Other fatty acids, which may be suitable for application appear in Table 2.

| | | fatty acid percentage in oil | | | | | | |
|---|---|---|---|---|---|---|---|---|
| Seeds | | Polyunsaturated | | | Mono-unsaturated | Saturated | | |
| Name | Fat Content in seed (%) | LNA 18:3w3 (%) | LA 18:2w6 (%) | LNA+LA w3+w6 (%) | 18:1w9 (%) | 18:0 (%) | 16:0 (%) | Total (%) |
| hemp | 35 | 20 | 60* | 80 | 12 | 2 | 6 | 8 |
| chia | 30 | 30 | 40 | 70 | - | - | - | - |
| kukui | 30 | 29 | 40 | 69 | - | - | - | - |
| flax | 35 | 58 | 14 | 72 | 19 | 4 | 5 | 9 |
| pumpkin | 46.7 | 0-15 | 42-57 | 57 | 34 | 0 | 9 | 9 |
| soybean | 17.7 | 7 | 50 | 57 | 26 | 6 | 9 | 15 |
| walnut | 60 | 5 | 51 | 56 | 28 | 5 | 11 | 16 |
| wheat germ | 10.9 | 5 | 50 | 55 | 25 | 18 | 0 | 18 |
| evening primrose | 17 | - | 81** | 81 | 11 | 2 | 6 | 8 |
| safflower | 59.5 | - | 75 | 75 | 13 | 12 | - | 12 |
| sunflower | 47.3 | - | 65 | 65 | 23 | 12 | - | 12 |
| grape | 20 | - | 71 | 71 | 17 | 12 | - | 12 |
| corn | 4 | - | 59 | 59 | 24 | 17 | - | 17 |
| sesame | 49.1 | - | 45 | 45 | 42 | 13 | - | 13 |
| rice bran | 10 | 1 | 35 | 36 | 48 | 17 | - | 17 |
| cottonseed | 40 | - | 50 | 50 | 21 | 25 | - | 25 |
| rape(canola) | 30 | 7 | 30 | 37 | 54*** | 7 | - | 7 |
| peanut | 47.5 | - | 29 | 29 | 47 | 18 | - | 18 |
| almond | 54.2 | - | 17 | 17 | 78 | 5 | - | 5 |
| olive | 20 | - | 8 | 8 | 75 | 16 | - | 16 |
| avocado | 12 | - | 10 | 10 | 70 | 20 | - | 20 |
| coconut | 35.3 | - | 3 | 3 | 6 | 0 | 91 | 91 |
| palm kernel | 35.3 | - | 2 | 2 | 13 | 0 | 85 | 85 |
| beech | 50 | - | 32 | 32 | 54 | 8 | - | 8 |
| brazil | 66.9 | - | 24 | 24 | 48 | 24 | - | 24 |
| pecan | 71.2 | - | 20 | 20 | 63 | 7 | - | 7 |
| pistachio | 53.7 | - | 19 | 19 | 65 | 9 | - | 9 |
| hickory | 68.7 | - | 17 | 17 | 68 | 9 | - | 9 |
| filbert | 62.4 | - | 16 | 16 | 54 | 5 | - | 5 |
| macadamia | 71.6 | - | 10 | 10 | 71 | 12 | - | 12 |
| cashew | 41.7 | - | 6 | 6 | 70 | 18 | - | 18 |
| neem | 40 | 1 | 20 | 21 | 41 | 20 | - | 20 |
| | | | | | | | | |

| | | | | | | | | |
|---|---|---|---|---|---|---|---|---|
| * Includes up to 2% GLA - Gamma Linolenic Acid ** Includes 9% GLA *** Includes up to 5 % erucic acid | | | | | | | | |

According to some embodiments of the present invention, up to 98 percent and no less then 20% of the carrier comprises vegetable oils, as is described.

### Salts

The compositions of the present invention include at least one non-toxic salt, such as, but not limited to sodium chloride and potassium chloride.

Sodium chloride (Halite) is a natural inexpensive crystal which contains anions and cations in a perfect square arrangement, each anion is surrounded by 6 cations and *vice versa ,* it is optically transparent so it would not interfere with the pigment performance it is highly stable and would be so up to about 800°C it is used in this liquid colorant as a stabilizer and viscosity control agent (generally it would maintain or reduce viscosity with most organic pigments and elevate the viscosity with inorganic pigments. According to some embodiments, the color concentrate compositions of the present invention comprise no less than 1% salt and up to 35% salt.

Without being bound to any theory, it is believed that the addition of salt to the colorant compositions of the present invention improve at least one of the following composition parameters: stability, micromixing, shelf-life, dispersion in plastics, viscosity control, physical spacing within a plastic material; compatibility range with plastics, reduction of re-agglomeration of magnetic particles within the colorant and minimizing composition particle size distribution.

### Starch

A starch in the carrier system can be used as an added assistance to control viscosity and stability. Without being bound to any theory, it is suggested that at room temperature, the polymer sugar chains in starch bond to the vegetable oil fatty acid molecules, thereby preventing segregation. Thus maintaining liquid stability of these concentrate compositions without significant thixotropy. The starch is transparent and thought to help in preventing the colorant system from rising to the surface of a manufactured article comprising the concentrate. One preferred starch is a potato starch, although corn starch is usable as well. Both are inexpensive as a powder or non aqueous liquid.

### Colorants and/or Additives (II)

The term "colorant" used throughout this specification and in the appended claims, to denote any conventional inorganic or organic pigment, organic dyestuff, or carbon black. Those skilled in the art will be aware of suitable inorganic pigments, organic pigments and dyestuffs useful in component (II) of the concentrate compositions. Such pigments are described, for example, in Kirk-Othmer Encyclopedia of Chemical Technology, Third Edition, vol. 6, pp. 597-617; examples are:
(1) inorganic pigments, such as titanium dioxide, carbon black, iron oxide, zinc chromate, cadmium sulfides, chromium oxides, sodium aluminum silicate complexes, such as ultramarine pigments, metal flakes and the like; and
(2) organic types such as azo and diazo pigments, phthalocyanines, quinacridone pigments, perylene pigments, isoindolinone, anthraquinones, thioindigo, solvent dyes and the like.

Although principally employed in the preparation of liquid colorant concentrates, the carrier (I) should also be suitable for the production of multi-functional dispersions that combine a colorant with one or more standard additives.

In an other aspect, the present invention relates to methods of coloring or modifying polymeric resins. The liquid colorant concentrates of this invention are added to the polymeric resin to be colored or modified in amounts up to about 0.5%, preferably no less then 0.01% and up to about 3.0%, based on the weight of the concentrate. The amount used is often referred to as the "letdown" or "letdown ratio" and is normally dependent on the color intensity desired or required level of additive. Also, admixtures of one or more concentrates may be employed to vary the color or other properties of the resin.

A polymeric resin may be modified or colored by the liquid color concentrates of the present invention by mixing. mixing means that the mixture is prepared by simple mixing or tumbling as to cover the polymeric resin in its entirety with out using mechanical shear or thermal energy. For example, a particularly useful procedure is to mix the polymeric resin with one or more colorant concentrates using conventional mixing equipment such as a double ribbon blender, a drum tumbler or a planetary slow mixer etc. The polymers may be mixed in the form of granules, pellets, and/or powder in a low shear mixer.

One preferred process for coloring and/or modifying polymeric resins according to the invention utilizes an in-line metering system for direct incorporation of the concentrate into a polymer resin at the extruder or molding machine. The colorant concentrates may be added in measured amounts to the polymeric resin either by tumbling with the resin or by pumping the concentrate into the feed throat of a plastic machine or metering into the polymer's melt stream.

The concentrates of the present invention may be used to color or incorporate additives into a wide variety of polymeric resins and find equal application in modification of both thermoplastic and thermoset resins. For example, the color concentrates of the invention are generally compatible with, and may be used with the following resins: polyolefins such as LLDPE, HDPE, LDPE, homopolymer and copolymer polypropylenes, EVA, etc.; styrenics such as crystal polystyrene, HIPS, MIPS, etc.; copolymer resins, resin blends and alloys such as ABS, polyphenylene ether (including PPO blends such as NORYL®), various engineering polymer alloys; polyamide resins, such as Nylon 6, 6/6, 11, 12, copolymers, terpolymers, etc.; acrylic resins, polycarbonates, and other amorphous resins; polyesters, such as PET, PBT, and others--both thermoplastic and curing, as well as resins reinforced with glass, quartz, carbon, Aramid, or the like, fibers.

Biodegradable plastics are plastics that will decompose in natural aerobic (composting) and anaerobic (landfill) environments. Materials such as a polyhydroxyalkanoate (PHA) biopolymer are completely compostable in an industrial compost facility. Polylactic acid (PLA) is another 100% compostable biopolymer which can fully degrade above 60C in an industrial composting facility. Fully biodegradable plastics are more expensive, partly because they are not widely enough produced to achieve large economies of scale.

Some embodiments of the present invention provide biodegradable colorant concentrate compositions.

Further embodiments of the present invention provide colored biodegradable plastics made from at least one biodegradable plastic in combination with a colorant concentrate composition, prepared by a method exemplified in Examples 1-6 hereinbelow. The colorant concentrate composition is provided at a let down of 0.1-3%.

### EXAMPLES

### Example 1; coloring of molded polypropylene copolymer

A liquid colorant was prepared comprising: 60.5% soybean oil, 22% halite, 2% potato starch and 15.5% red 170 (organic pigment).

The oil was placed in a stainless steel vessel. Halite and starch were added. The vessel was placed under a basket mill such as one made by VMA Getzmann running between 500-2500 rpm. The carrier ingredients were then dispersed for about 2 min using the basket mill. The pigment was added and dispersed for additional two minutes. The basket was lowered and thereafter the liquid colorant was milled for fifteen minutes to achieve a sub-micron grain size.

The resultant liquid colorant was fed via peristaltic pump at a rate (let down) of 0.5% of the resin per cycle.

### Example 2; coloring of polycarbonate board 3.5mm thick. A liquid colorant was prepared comprising: 65% cottonseed oil, 27% halite, 3.5%starch, 0.5% carbon black and 4% yellow 83.

The liquid colorant was prepared the same way as in Example 1. The colorant was then fed into a cast extruder at a let down of 0.1%.

### Example 3; coloring of Polyoxymethylene (POM), (molded)

A liquid colorant was prepared comprising: 20% sunflower oil, 35% soybean oil, 25% sodium chloride, 5% potato starch, 10% blue 15:3 and 5% TiO₂

The preparation was conducted in the same way as in Example 1. The POM, with an addition of 0.5 of the liquid colorant, was placed in a tumbler and was tumbled for about 3 min. The colored POM was then placed in the molding machine hopper and was directly molded.

### Example 4; coloring of unsaturated polyester.

A liquid colorant was prepared comprising: 40% cottonseed oil, 30% salt, 15% starch, 10% TiO₂ 2% carbon black and 3% ultramarine blue

The carrier was prepared according to Example 1 and the pigments added and were milled together in a basket mill at 1750 rpm. The colorant was added to an unsaturated polyester preparation and mixed together for about 10 min.

### Example 5; coloring of LDPE film.

A colorant was made comprising: 50% soybean oil, 10% halite, 2% starch and 38% TiO₂.

The carrier liquid concentrate was prepared by the same method (as in Example 1, and was fed into a film extruder via a peristaltic pump into a vacuum vent area at a let down of 2%, to achieve a totally opaque film.

### Example 6; coloring of polyamide 6:6 reinforced with 33% long glass fibers.

A colorant was made comprising: 60% cottonseed oil, 20% halite, 5% starch and 15% carbon black.

All ingredients, but half the oil, were placed in a dissolver and pre-dispersed. The resultant paste was then passed twice through a 3 roll mill, then placed back into the dissolver. The saved oil was added and the liquid colorant was mixed well to form the colorant. The colorant was then fed into the injection molding machine via screw pump at a let down of 0.6%.

In order that those skilled in the art will be better able to practice the invention, the following examples are given by way of illustration and not by way of limitation. Unless otherwise noted, all percentages are by weight of the total composition. All temperatures, if not specified, are ambient temperature.

While the invention has been explained in relation to its preferred embodiments, it is to be understood that various modifications thereof will become apparent to those skilled in the art upon reading the specification.

Therefore, it is to be understood that the invention disclosed herein is intended to cover such modifications as fall within the scope of the appended. The references cited herein teach many principles that are applicable to the present invention.

## Claims

1. A liquid colorant concentrate composition comprising:
(I) a natural oil-based carrier comprising:
(a) at least 35 percent by weight of the carrier comprising at least one vegetable oil; and
(b) at least 1.0 percent by weight of the total concentrate comprising at least one salt; and
(II) at least one colorant

2. A liquid colorant concentrate composition according to claim 1 further comprising at least one additive selected from UV stabilizers, absorbers, antioxidants, fire retardants, blowing agents, antistats, impact modifiers, mold release agents, filler/reinforcing materials and mixtures thereof.

3. A liquid colorant concentrate composition according to claim 1 or 2, comprising up to 50 percent by weight of said at least one colorant.

4. A liquid colorant concentrate composition according to claim 1 or 2, wherein said liquid colorant concentrate composition is adapted to flow readily by gravity and is **characterized by** a viscosity at 25°C under a shear stress of 0.125 N/cm² (12.5 thousand dynes/cm²) of 0.005 to 1.5 Pa.s ( 5 to 1500 centiPoise).

5. A liquid colorant concentrate composition according to claim 1 or 2, wherein said natural oil-based carrier is free of water.

6. A liquid colorant concentrate composition according to claim 1 or 2, comprising 0.5% to 20% by weight of starch.

7. A liquid colorant concentrate composition according to claim 1 or 2, wherein said at least one colorant is selected from the group consisting of titanium dioxide, carbon black, iron oxide, zinc chromate, cadmium sulfide, chromium oxide, a sodium aluminum silicate complex, an ultramarine pigment, metal flakes, an azo pigment, a diazo pigment, phthalocyanine, a quinacridone pigment, a perylene pigment, isoindolinone, anthraquinone, thio-indigo, a solvent dye and combinations thereof.

8. A liquid colorant concentrate composition according to claim 1 or 2 wherein the salt includes at least one non-toxic salt selected among sodium chloride and potassium chloride.

9. A method for forming a liquid colorant concentrate composition, the method comprising:
a. blending a natural oil-based carrier comprising at least 40 percent by weight of the carrier of at least one vegetable oil with at least 1.0% by weight of the carrier of at least one salt to obtain a carrier composition; and
b. mixing up to 50 percent by weight of a concentrate comprising at least one colorant;
with said carrier composition thereby forming said liquid colorant concentrate composition.

10. A method according to claim 9 further comprising mixing up to 50 percent by weight of at least one additive, said additive being selected from UV stabilizers, absorbers, antioxidants, fire retardants, blowing agents, antistats, impact modifiers, mold release agents, filler/reinforcing materials and mixtures thereof.

11. A method according to claim 9 or 10, wherein said mixing step induces size reduction of particles in said colorant concentrate composition to less than 10 microns.

12. A method according to claim 9 or 10, wherein said mixing step induces size reduction of particles in said colorant concentrate composition to an average sub-micron size.

13. A method according to claim 9 or 10, wherein both blending and mixing steps are performed in one cycle in one vessel.

## Patentansprüche

1. Flüssige Farbmittelkonzentrat-Zusammensetzung, umfassend:
(I) einen natürlichen ölbasierten Träger, umfassend, dass:
(a) mindestens 35 Gewichtsprozent des Trägers mindestens ein Pflanzenöl umfassen; und
(b) mindestens 1,0 Gewichtsprozent des gesamten Konzentrats mindestens ein Salz umfasst; und
(II) mindestens ein Farbmittel.

2. Flüssige Farbmittelkonzentrat-Zusammensetzung nach Anspruch 1, ferner umfassend mindestens einen Zusatzstoff, der aus UV-Stabilisatoren, Absorptionsmitteln, Antioxidationsmitteln, flammhemmenden Mitteln, Treibmitteln, Antistatika, Schlagzähigkeitsverbesserern, Formentrennmitteln, Füll-/Verstärkungsmaterialien und Mischungen davon ausgewählt ist.

3. Flüssige Farbmittelkonzentrat-Zusammensetzung nach Anspruch 1 oder 2, umfassend bis zu 50 Gewichtsprozent des mindestens einen Farbmittels.

4. Flüssige Farbmittelkonzentrat-Zusammensetzung nach Anspruch 1 oder 2, wobei die flüssige Farbmittelkonzentrat-Zusammensetzung so ausgelegt ist, dass sie durch Schwerkraft leicht fließt, und durch eine Viskosität bei 25 °C unter einer Scherspannung von 0,125 N/cm² (12.500 Dyn/cm²) von 0,005 bis 1,5 Pa.s (5 bis 1500 Centipoise) gekennzeichnet ist.

5. Flüssige Farbmittelkonzentrat-Zusammensetzung nach Anspruch 1 oder 2, wobei der natürliche ölbasierte Träger frei von Wasser ist.

6. Flüssige Farbmittelkonzentrat-Zusammensetzung nach Anspruch 1 oder 2, umfassend 0,5 bis 20 Gewichts-% Stärke.

7. Flüssige Farbmittelkonzentrat-Zusammensetzung nach Anspruch 1 oder 2, wobei das mindestens eine Farbmittel aus der Gruppe bestehend aus Titandioxid, Ruß, Eisenoxid, Zinkchromat, Cadmiumsulfid, Chromoxid, einem Natrium-Aluminium-Silicat-Komplex, einem Ultramarin-Pigment, Metallflöckchen, einem Azopigment, einem Diazopigment, Phthalocyanin, einem Chinacridon-Pigment, einem Perylen-Pigment, Isoindolinon, Anthrachinon, Thio-Indigo, einem Lösungsmittelfarbstoff und Kombinationen davon ausgewählt ist.

8. Flüssige Farbmittelkonzentrat-Zusammensetzung nach Anspruch 1 oder 2, wobei das Salz mindestens ein nicht-toxisches Salz umfasst, das unter Natriumchlorid und Kaliumchlorid ausgewählt ist.

9. Verfahren zur Bildung einer flüssigen Farbmittelkonzentrat-Zusammensetzung, wobei das Verfahren umfasst:
a. Mischen eines natürlichen ölbasierten Trägers, wobei mindestens 40 Gewichtsprozent des Trägers mindestens ein Pflanzenöl umfassen, mit mindestens einem Salz von mindestens 1,0 Gewichts-% des Trägers, um eine Trägerzusammensetzung zu erhalten; und
b. Vermischen von bis 50 Gewichtsprozent eines Konzentrats, das mindestens ein Farbmittel umfasst;
mit der Trägerzusammensetzung, um dadurch die flüssige Farbmittelkonzentrat-Zusammensetzung zu bilden.

10. Verfahren nach Anspruch 9, ferner umfassend ein Vermischen von bis zu 50 Gewichtsprozent mindestens eines Zusatzstoffs, der aus UV-Stabilisatoren, Absorptionsmitteln, Antioxidationsmitteln, flammhemmenden Mitteln, Treibmitteln, Antistatika, Schlagzähigkeitsverbesserern, Formentrennmittel, Füll-/Verstärkungsmaterialien und Mischungen davon ausgewählt ist.

11. Verfahren nach Anspruch 9 oder 10, wobei der Vermischschritt eine Größenreduktion von Teilchen in der Farbmittelkonzentrat-Zusammensetzung auf weniger als 10 Mikrometer umfasst.

12. Verfahren nach Anspruch 9 oder 10, wobei der Vermischschritt eine Größenreduktion von Teilchen in der Farbmittelkonzentrat-Zusammensetzung auf eine durchschnittliche Größe im Submikrometerbereich umfasst.

13. Verfahren nach Anspruch 9 oder 10, wobei sowohl die Misch- als auch Vermischschritte in einem Zyklus in einem Behälter ausgeführt werden.

## Revendications

1. Composition de concentré de colorant liquide comprenant :
(I) un support à base d'huile naturel, comprenant :
(a) au moins 35 % en poids du support comprenant au moins une huile végétale ; et
(b) au moins 1,0 % en poids du concentré total comprenant au moins un sel ; et
(II) au moins un colorant.

2. Composition de concentré de colorant liquide selon la revendication 1, comprenant en outre au moins un additif choisi parmi les stabilisateurs d'UV, les absorbeurs, les antioxydants, les ignifuges, les agents d'expansion, les agents antistatiques, les modificateurs d'impact, les agents de démoulage, les charges/matériaux de renforcement et des mélanges de ceux-ci.

3. Composition de concentré de colorant liquide selon la revendication 1 ou 2, comprenant jusqu'à 50 % en poids dudit au moins un colorant.

4. Composition de concentré de colorant liquide selon la revendication 1 ou 2, dans laquelle ladite composition de concentré de colorant liquide est adaptée pour s'écouler facilement par gravité et est **caractérisée par** une viscosité à 25 °C sous une contrainte de cisaillement de 0,125 N/cm² (12 500 dynes/cm³) de 0,005 à 1,5 Pa.s (5 à 1500 centiPoise).

5. Composition de concentré de colorant liquide selon la revendication 1 ou 2, dans laquelle ledit support à base d'huile naturel est exempt d'eau.

6. Composition de concentré de colorant liquide selon la revendication 1 ou 2, comprenant de 0,5 % à 20 % en poids d'amidon.

7. Composition de concentré de colorant liquide selon la revendication 1 ou 2, dans laquelle ledit au moins un colorant est choisi dans le groupe constitué par le dioxyde de titane, le noir de carbone, l'oxyde de fer, le chromate de zinc, le sulfure de cadmium, l'oxyde de chrome, un complexe de silicate de sodium aluminium, un pigment outremer, des flocons métalliques, un pigment azo, un pigment diazo, la phtalocyanine, un pigment quinacridone, un pigment pérylène, l'isoindolinone, l'anthraquinone, le thio-indigo, un colorant de type solvant et des combinaisons de ceux-ci.

8. Composition de concentré de colorant liquide selon la revendication 1 ou 2, dans laquelle le sel comprend au moins un sel non toxique choisi parmi le chlorure de sodium et le chlorure de potassium.

9. Procédé de formation d'une composition de concentré de colorant liquide, le procédé consistant à :
a. mélanger un support à base d'huile naturel comprenant au moins 40 % en poids du support d'au moins une huile végétale avec au moins 1,0 % en poids du support d'au moins un sel pour obtenir une composition de support ; et
b. malaxer jusqu'à 50 % en poids d'un concentré comprenant au moins un colorant ;
ladite composition de support formant ainsi ladite composition de concentré de colorant liquide.

10. Procédé selon la revendication 9, consistant en outre à mélanger jusqu'à 50 % en poids d'au moins un additif, ledit additif étant choisi parmi les stabilisateurs d'UV, les absorbeurs, les antioxydants, les ignifuges, les agents d'expansion, les agents antistatiques, les modificateurs d'impact, les agents de démoulage, les charges/matériaux de renforcement et des mélanges de ceux-ci.

11. Procédé selon la revendication 9 ou 10, dans lequel ladite étape de mélange comprend la réduction de la taille des particules dans ladite composition de concentré de colorant liquide à moins de 10 µm.

12. Procédé selon la revendication 9 ou 10, dans lequel ladite étape de mélange comprend la réduction de la taille des particules dans ladite composition de concentré de colorant liquide à une taille moyenne de l'ordre submicronique.

13. Procédé selon la revendication 9 ou 10, dans lequel les deux étapes de mélange et malaxage sont réalisées en un cycle dans un récipient.
